# EUROPEAN PATENT APPLICATION

(11) **EP 2 878 495 A1**
(43) Date of publication of application: **03.06.2015**
(21) Application number: 14195390.1
(22) Date of filing: 28.11.2014
(51) Int. Cl.: B60R 19/34

(54) **Shock absorbing member**

(30) Priority: 29.11.2013 JP 2013247034
(71) Applicant: AISIN SEIKI KABUSHIKI KAISHA, Kariya-shi, Aichi-ken 448-8650 (JP); Aisin Keikinzoku Kabushiki Kaisha, Imizu-shi, Toyama 934-8588 (JP)
(72) Inventor: Kaneko, Takanobu, KARIYA-SHI, AICHI-KEN, 448-8650 (JP); Shobo, Jun, IMIZU-SHI, TOYAMA-KEN, 934-8588 (JP); Kanatani, Yohei, IMIZU-SHI, TOYAMA-KEN, 934-8588 (JP)
(74) Representative: Intès, Didier Gérard André

(57) **Abstract**

Provided is a shock absorbing member (10C) including: a first shock absorbing portion (SA1) for absorbing shock through compression in a vehicle front-and-rear direction, the first shock absorbing portion being formed into a tubular shape extending in a predetermined direction, and including at least one rib extending in the predetermined direction at an inner side of the first shock absorbing portion; and a second shock absorbing portion (SA2) for absorbing the shock through compression in the vehicle front-and-rear direction, the second shock absorbing portion (SA2) being formed integrally with the first shock absorbing portion (SA1) into a tubular shape extending in the predetermined direction at an outer side in a vehicle width direction with respect to the first shock absorbing portion, and including at least one rib extending in the predetermined direction at an inner side of the second shock absorbing portion. The second shock absorbing portion is supported in abutment against one of a front end surface and a rear end surface of a support member (SPR) provided at an outer side in the vehicle width direction with respect to a side member (SR). A total area of a wall portion forming a contour of the first shock absorbing portion (SA1) and the at least one rib of the first shock absorbing portion in a cross-section perpendicular to the predetermined direction is larger than a total area of a wall portion forming a contour of the second shock absorbing portion (SA2) and the rib of the second shock absorbing portion in a cross-section perpendicular to the predetermined direction.

## Description

### TECHNICAL FIELD

The present disclosure relates to a shock absorbing member for absorbing shock through its deformation in the event of collision of a vehicle.

### BACKGROUND DISCUSSION

Hitherto, there have been known vehicles including a shock absorbing member for absorbing shock through its deformation in the event of collision of the vehicles. Such vehicles include side members provided so as to extend in a vehicle front-and-rear direction, and a bumper reinforcement provided at the front of (or at the rear of) the side members so as to extend in a vehicle width direction. The shock absorbing member is provided so as to extend in the vehicle front-and-rear direction, and has a rear end portion (or front end portion) connected to a front end portion (or rear end portion) of the side members, and also has a front end portion (or rear end portion) connected to an intermediate portion of the bumper reinforcement in the vehicle width direction, which is positioned on a slightly inner side with respect to an end portion of the bumper reinforcement in the vehicle width direction. When an object collides against a front end (or rear end) of the vehicle, the shock absorbing member is compressed in an axial line direction thereof (vehicle front-and-rear direction). With this, the shock caused by the collision is absorbed.

One end portion of the bumper reinforcement in the vehicle width direction (part on an outer side in the vehicle width direction with respect to the shock absorbing member) is not supported. Thus, when an object collides into a small region of the vehicle on one end side in the vehicle width direction during travel of the vehicle (for example, in the front end portion of the vehicle at a part ranging from the intermediate portion in the vehicle width direction to one end in the vehicle width direction) (hereinafter referred to as small overlap collision), the one end portion of the bumper reinforcement in the vehicle width direction may be bent. When the one end portion of the bumper reinforcement in the vehicle width direction is bent, a direction of a load to be applied to the shock absorbing member through intermediation of the bent part is diverted with respect to an axial line direction of the shock absorbing member. Thus, the shock absorbing member fails to be compressed in the axial line direction thereof, resulting in insufficient absorption of the shock. In other words, this vehicle is not adaptable to the small overlap collision.

There have been known vehicles as described in, for example, Japanese Patent Application Laid-open No. 2010-83448 and Japanese Patent Application Laid-open No. 2012-166744. In those vehicles, the end portion of the bumper reinforcement is suppressed from being bent in the event of the small overlap collision. The vehicle described in Japanese Patent Application Laid-open No. 2010-83448. further includes a pair of upper members formed so as to extend respectively from front pillars positioned above a pair of side members toward the end portions of the bumper reinforcement in the vehicle width direction. The upper members are connected to the end portions of the bumper reinforcement in the vehicle width direction through intermediation of the shock absorbing members. Specifically, the intermediate portion of the bumper reinforcement in the vehicle width direction is supported by the pair of side members through intermediation of a pair of shock absorbing members (inner-side shock absorbing members), and the one end portion of the bumper reinforcement in the vehicle width direction is supported by the corresponding upper member through intermediation of the shock absorbing member (outer-side shock absorbing member). With this, in the event of the small overlap collision, the one end portion of the bumper reinforcement in the vehicle width direction is suppressed from being bent. As a result, the inner-side shock absorbing member and the outer-side shock absorbing member are compressed in respective axial line directions. In this way, shock is sufficiently absorbed.

Further, the vehicle described in Japanese Patent Application Laid-open No. 2012-166744 includes, in addition to normal shock absorbing members, a pair of coupling members for coupling a front end surface (or rear end surface) of the side member and a rear end surface (or front end surface) of the end portion of the bumper reinforcement. With this, in the event of the small overlap collision, bending of the one end portion of the bumper reinforcement in the vehicle width direction is suppressed. As a result, the shock absorbing members are compressed in respective axial line directions. In this way, shock is sufficiently absorbed.

In the vehicle described in Japanese Patent Application Laid-open No. 2010-83448, the intermediate portion of the bumper reinforcement in the vehicle width direction is supported not only by the pair of side members through intermediation of the pair of inner-side shock absorbing members, but the one end portion of the bumper reinforcement in the vehicle width direction is supported also by the corresponding upper member through intermediation of the outer-side shock absorbing member. Thus, in comparison with vehicles that are not adaptable to the small overlap collision, the structure of the front end portion of the vehicle is more complicated, and the number of components becomes larger. As a result, the number of assembly steps for the vehicle becomes larger.

Further, the structure of the front end portion of the vehicle described in Japanese Patent Application Laid-open No. 2012-166744 is simplified in comparison with that of the vehicle of Japanese Patent Application Laid-open No. 2010-83448. However, in addition to the shock absorbing members, the coupling members need to be assembled to the side members and the bumper reinforcement. Thus, also in this case, in comparison with the vehicles that are not adaptable to the small overlap collision, the number of components becomes larger, and the number of assembly steps for the vehicle becomes larger.

### SUMMARY

The present disclosure has been made to overcome the problems described above, and it is therefore an object of the present disclosure to provide a shock absorbing member capable of efficiently absorbing shock caused in the event of collision of an object into a small region at a front end or a rear end of a vehicle on one end side in a vehicle width direction, and also capable of being easily assembled to a vehicle body. Note that, in the description of components hereinbelow, for the sake of better understanding of the present disclosure, reference symbols of corresponding components in the embodiment of the present disclosure are described in parentheses. However, the components in the present disclosure should not be construed as being limited to the corresponding components denoted by the reference symbols in the embodiment.

In order to achieve the above-mentioned object, the present disclosure has a feature in a shock absorbing member (10, 10A, 10B, 10C) to be interposed between a side member (SR) provided so as to extend in a vehicle front-and-rear direction and a bumper reinforcement (BR) provided at one of a front and a rear of the side member so as to extend in a vehicle width direction, the shock absorbing member including: a first shock absorbing portion (SA1) for absorbing, through compression in the vehicle front-and-rear direction, shock to be applied from one of a rear side and a front side of a vehicle to the bumper reinforcement, the first shock absorbing portion being formed into a tubular shape extending in a predetermined direction, and being supported in abutment against one of a front end surface and a rear end surface of the side member, the first shock absorbing portion including at least one rib (R1v, R1h, R1T, R1B, R1R, R1 L) extending in the predetermined direction at an inner side of the first shock absorbing portion; and a second shock absorbing portion (SA2) for absorbing, through compression in the vehicle front-and-rear direction, the shock to be applied from the one of the rear side and the front side of the vehicle to the bumper reinforcement, the second shock absorbing portion being formed integrally with the first shock absorbing portion into a tubular shape extending in the predetermined direction at an outer side in the vehicle width direction with respect to the first shock absorbing portion, and being supported in abutment against one of a front end surface and a rear end surface of a support member (SPR) provided at an outer side in the vehicle width direction with respect to the side member, the second shock absorbing portion including at least one rib (R2v) extending in the predetermined direction at an inner side of the second shock absorbing portion, in which a total area of a wall portion (21, 22, 23, 27) forming a contour of the first shock absorbing portion and the rib (R1v, R1h) of the first shock absorbing portion in a cross-section of the first shock absorbing portion, which is cut along a plane perpendicular to the predetermined direction, is larger than a total area of a wall portion (21, 22, 24, 25, 26, 27) forming a contour of the second shock absorbing portion and the rib (R2v) of the second shock absorbing portion in a cross-section of the second shock absorbing portion, which is cut along the plane perpendicular to the predetermined direction.

In this case, it is preferred that a total number of sides defined in the cross-section of the first shock absorbing portion, which is cut along the plane perpendicular to the predetermined direction, is larger than a total number of sides defined in the cross-section of the second shock absorbing portion, which is cut along the plane perpendicular to the predetermined direction. Note that, when the wall portions are continuous with other wall portions or ribs, connecting portions therebetween are each assumed as one end of the corresponding side. Similarly, connecting portions between rib portions are each assumed as one end of the corresponding side.

In this case, it is preferred that the first shock absorbing portion and the second shock absorbing portion are formed integrally with each other by an extrusion process so that the predetermined direction corresponds to the vehicle front-and-rear direction.

Further, in this case, it is preferred that the wall portion of the first shock absorbing portion and the rib of the first shock absorbing portion are larger in thickness than the wall portion of the second shock absorbing portion and the rib of the second shock absorbing portion.

Further, in this case, it is preferred that the rib of the first shock absorbing portion include: a first rib (R1T) extending downward from an upper wall portion of the first shock absorbing portion; and a second rib (R1 B) extending upward from a lower wall portion of the first shock absorbing portion, and that a lower end surface of the first rib and an upper end surface of the second rib are spaced apart from each other in a vehicle height direction.

Further, in this case, it is preferred that the rib of the first shock absorbing portion include: a first rib (R1 L) extending rightward from a left wall portion of the first shock absorbing portion; and a second rib (R1 R) extending leftward from a right wall portion of the first shock absorbing portion, and that a right end surface of the first rib and a left end surface of the second rib are spaced apart from each other in the vehicle width direction.

Further, in this case, it is preferred that the first shock absorbing portion and the second shock absorbing portion are formed integrally with each other by an extrusion process so that the predetermined direction corresponds to a vehicle height direction.

According to the present disclosure, the total area of the wall portion forming the contour of the first shock absorbing portion and the rib of the first shock absorbing portion in the cross-section of the first shock absorbing portion, which is cut along the plane perpendicular to the predetermined direction (for example, vehicle front-and-rear direction), is larger than the total area of the wall portion forming the contour of the second shock absorbing portion and the rib of the second shock absorbing portion in the cross-section of the second shock absorbing portion, which is cut along the plane perpendicular to the predetermined direction. Thus, a load to be applied to the first shock absorbing portion is higher than a load to be applied to the second shock absorbing portion. Therefore, a load to be applied to the side member for supporting the first shock absorbing portion is higher than a load to be applied to the support member for supporting the second shock absorbing portion. In other words, a load to be applied to the support member is lower than a load to be applied to the side member. Thus, even in a case where the strength of the support member is smaller than the strength of the side member, the support member can be suppressed from being damaged due to the shock.

When the object intrudes into a vehicle cabin, the first shock absorbing portion and the second shock absorbing portion, which are supported respectively by the side member and the support member, are compressed in the vehicle front-and-rear direction. Specifically, the rib and the wall portion forming the contour of each of the first shock absorbing portion and the second shock absorbing portion are deformed into a bellows shape. According to the shock absorbing member of the present disclosure, damage to the support member in the event of the small overlap collision can be suppressed, and shock caused by the collision can be absorbed with the first shock absorbing portion and the second shock absorbing portion. Further, the shock absorbing member is integrally formed, and hence can be easily assembled to the bumper reinforcement, the side member, and the support member. In other words, in comparison with the related art, the number of components and the number of assembly steps for the vehicle can be reduced.

Further, the present disclosure has another feature in that an outer shape of the first shock absorbing portion in a cross-section perpendicular to the vehicle front-and-rear direction conforms to an outer shape of a body part of the side member in a cross-section perpendicular to the vehicle front-and-rear direction, and that an outer shape of the second shock absorbing portion in a cross-section perpendicular to the vehicle front-and-rear direction conforms to an outer shape of a body part of the support member in a cross-section perpendicular to the vehicle front-and-rear direction. With this, the loads in the vehicle front-and-rear direction, which are applied to the first shock absorbing portion and the second shock absorbing portion, are applied in the vehicle front-and-rear direction also to the side member and the support member. Thus, the loads can be suppressed from being applied intensively to a part of the side member and the support member. With this, the side member and the support member can be suppressed from being damaged.

### BRIEF DESCRIPTION OF THE DRAWINGS

FIG. 1 is a schematic view illustrating an overview of a small overlap collision test.
FIG. 2 is a perspective view of a front structure of a vehicle to which a shock absorbing member according to one embodiment of the present disclosure is applied.
FIG. 3 is an enlarged top view of a right part of a front end portion of the vehicle of FIG. 2.
FIG. 4 is a sectional view taken along the line A-A in FIG. 3.
FIG. 5 is a perspective view of the shock absorbing member of FIG. 2.
FIG. 6 is a front view of the shock absorbing member of FIG. 2.
FIG. 7 is a front view of a shock absorbing member that is changed in thickness of wall portions and ribs, and in number of the ribs from a first shock absorbing portion of FIG. 6.
FIG. 8 is a front view of another shock absorbing member that is changed in structure of ribs from the first shock absorbing portion of FIG. 6.
FIG. 9 is a top view of a front end portion of a vehicle to which a shock absorbing member according to a modification of the present disclosure is applied.

### DETAILED DESCRIPTION

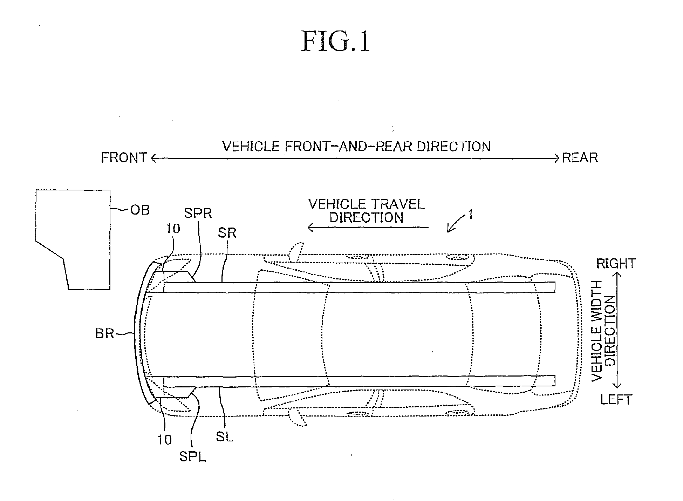

Description is made of shock absorbing members 10 according to one embodiment of the present disclosure. First, brief description is made of a structure of a front part of a vehicle 1 to which the shock absorbing members 10 are assembled. As illustrated in FIGS. 1 to 3, this vehicle 1 includes side members SL and SR provided in a pair on the left and right so as to extend in a vehicle front-and-rear direction, and a bumper reinforcement BR provided at the front of the side members SL and SR so as to extend from a left end to a right end of the vehicle 1 in a vehicle width direction. Further, this vehicle 1 includes support members SPL and SPR arranged so as to be adjacent respectively to the side members SL and SR at an outer side of the side members SL and SR in the vehicle width direction.

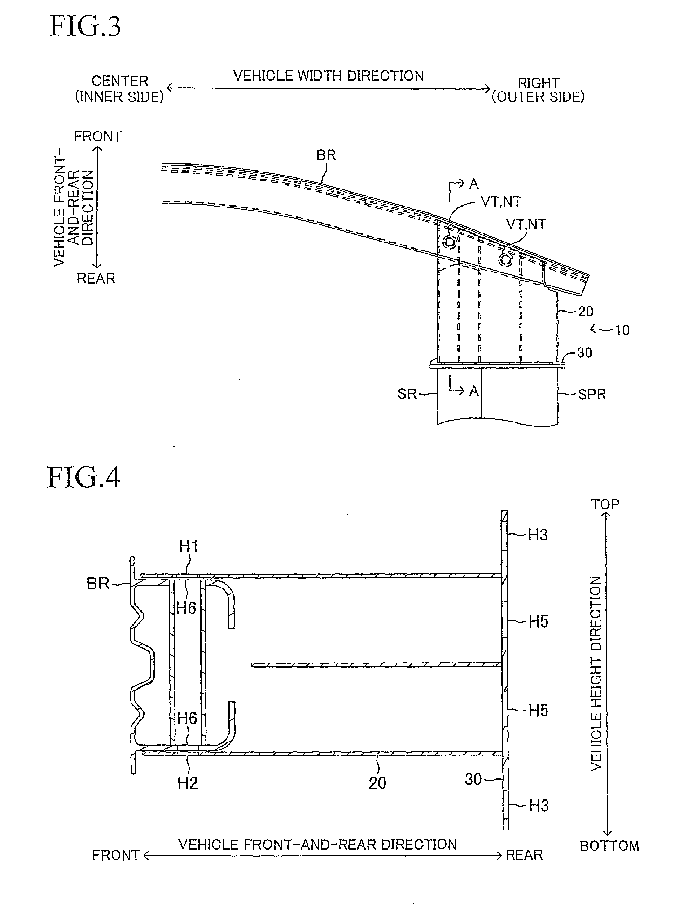

The side members SL and SR are arranged at an interval in the vehicle width direction. The side members SL and SR are arranged at positions at a distance that is approximately 1/4 of a vehicle width respectively from the left end and the right end of the vehicle 1 in the vehicle width direction. The side members SL and SR each include a tubular body part formed so as to extend in the vehicle front-and-rear direction, and flange-shaped bracket portions formed respectively on a front end surface and a rear end surface of the body part. The bumper reinforcement BR is formed into a tubular shape extending in the vehicle width direction. Note that, a central portion of a rear surface portion of the bumper reinforcement BR in a vehicle height direction is opened rearward (refer to FIG. 4). Further, the bumper reinforcement BR is curved in top view so that outer sides in the vehicle width direction are positioned slightly rearward with respect to an inner side in the vehicle width direction. The support members SPL and SPR are assembled to members that form a frame of the vehicle (for example, side members SL and SR). The support members SPL and SPR each include a tubular body part formed so as to extend in the vehicle front-and-rear direction, and flange-shaped bracket portions formed respectively on a front end surface and a rear end surface of the body part. The bumper reinforcement BR is connected to the side members SL and SR and the support members SPL and SPR through intermediation of the shock absorbing members 10 and 10. Specifically, front end portions of the shock absorbing members 10 and 10 are assembled to a rear end portion of the bumper reinforcement BR, and rear end portions of the shock absorbing members 10 and 10 are assembled to the flange portions of the side members SL and SR and the support members SPL and SPR. Note that, in this embodiment, the bumper reinforcement BR and the shock absorbing members 10 and 10 are described as members to be provided to a front end portion of the vehicle, but the present disclosure is applicable also to a case where the bumper reinforcement BR and the shock absorbing members 10 and 10 are provided to a rear end portion of the vehicle. Further, FIG. 3 illustrates only a right end portion of the front part of the vehicle 1 in the vehicle width direction. A left end portion of the front part of the vehicle 1 in the vehicle width direction is symmetrical with the right end portion in the vehicle width direction, and hence description thereof is omitted.

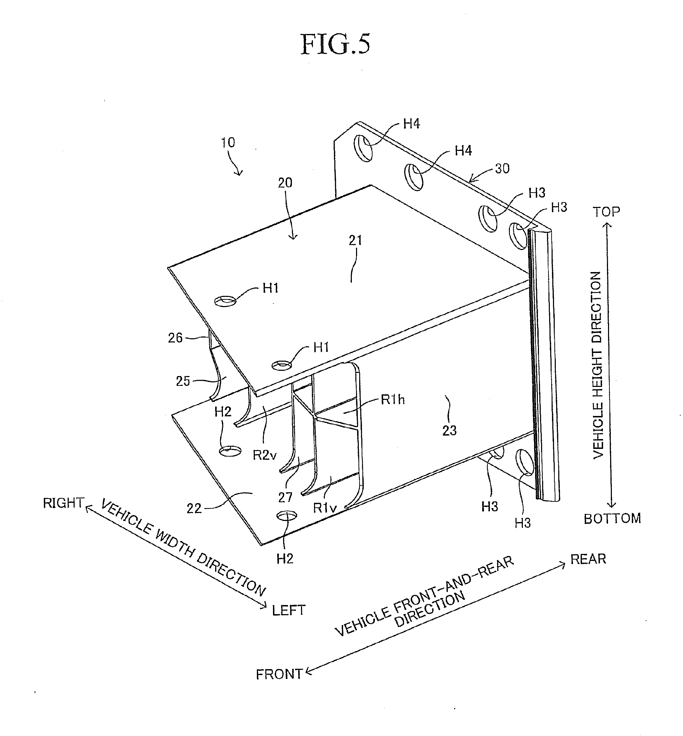

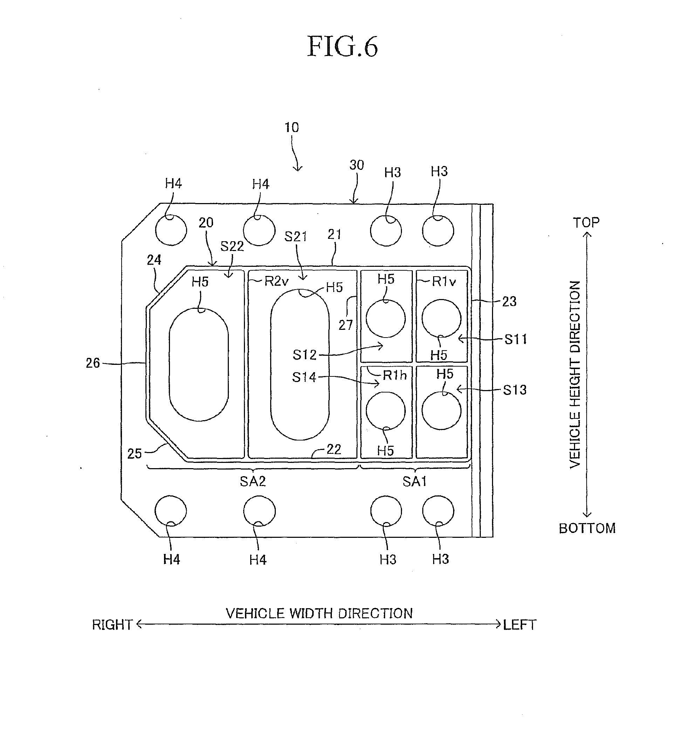

Next, description is made of the shock absorbing members 10. As illustrated in FIGS. 5 and 6, the shock absorbing members 10 each include a shock absorbing portion 20 and a bracket portion 30. A contour of the shock absorbing portion 20 is formed into a tubular shape extending in the vehicle front-and-rear direction. In this embodiment, the shock absorbing portion 20 has a hexagonal outer shape in a cross-section perpendicular to the vehicle front-and-rear direction. The sectional shape of the shock absorbing portion 20 in cross-sections cut in planes perpendicular to the vehicle front-and-rear direction is uniform regardless of the cutting position in the vehicle front-and-rear direction. Specifically, the shock absorbing portion 20 includes an upper wall portion 21 and a lower wall portion 22 each formed into a plate-like shape perpendicular to the vehicle height direction (in other words, has an upper surface and a lower surface each horizontally arranged). The upper wall portion 21 and the lower wall portion 22 are arranged apart from each other in the vehicle height direction. Further, the shock absorbing portion 20 includes a left wall portion 23 that is formed so as to extend downward from an end portion of the upper wall portion 21 on the inner side in the vehicle width direction and continuous with an end portion of the lower wall portion 22 on the inner side in the vehicle width direction. Still further, the shock absorbing portion 20 includes an inclined wall portion 24 that is formed so as to extend outward in the vehicle width direction and downward from an end portion of the upper wall portion 21 on the outer side in the vehicle width direction, and an inclined wall portion 25 that is formed so as to extend outward in the vehicle width direction and upward from an end portion of the lower wall portion 22 on the outer side in the vehicle width direction. Yet further, the shock absorbing portion 20 includes a right wall portion 26 that is formed so as to extend downward from an end portion of the inclined wall portion 24 on the outer side in the vehicle width direction and continuous with an end portion of the inclined wall portion 25 on the outer side in the vehicle width direction. The left wall portion 23, the inclined wall portion 24, the inclined wall portion 25, and the right wall portion 26 are each formed into a plate-like shape.

Further, the shock absorbing portion 20 includes a plate-like intermediate wall portion 27 formed so as to extend downward from a lower surface of the upper wall portion 21 and continuous with an upper surface of the lower wall portion 22. The intermediate wall portion 27 is arranged parallel to the left wall portion 23 and the right wall portion 26. In other words, a space surrounded by the upper wall portion 21, the lower wall portion 22, the left wall portion 23, the inclined wall portion 24, the inclined wall portion 25, and the right wall portion 26 is divided by the intermediate wall portion 27 into a space on the right side in the vehicle width direction and a space on the left side in the vehicle width direction. The intermediate wall portion 27 is arranged at a position at which a distance between the intermediate wall portion 27 and the left wall portion 23 is equal to a width of the body part of the side member SR in the vehicle width direction. A distance between the intermediate wall portion 27 and the right wall portion 26 is larger than the distance between the intermediate wall portion 27 and the left wall portion 23. In the shock absorbing portion 20, a left part with respect to the intermediate wall portion 27 is referred to as a first shock absorbing portion SA1, and a right part with respect to the intermediate wall portion 27 is referred to as a second shock absorbing portion SA2. In other words, the shock absorbing portion 20 includes the first shock absorbing portion SA1 and the second shock absorbing portion SA2 each having a tubular shape extending in the vehicle front-and-rear direction (having an axial line extending along the vehicle front-and-rear direction). An outer shape of the first shock absorbing portion SA1 in a cross-section perpendicular to the vehicle front-and-rear direction conforms to an outer shape of the body part of the side member SR in a cross-section perpendicular to the vehicle front-and-rear direction. Further, an outer shape of the second shock absorbing portion SA2 in a cross-section perpendicular to the vehicle front-and-rear direction conforms to an outer shape of the body part of the support member SPR in a cross-section perpendicular to the vehicle front-and-rear direction.

In the first shock absorbing portion SA1, a rib R1v and a rib R1h are formed so as to extend in the vehicle front-and-rear direction. The rib R1v is formed into a plate-like shape perpendicular to the vehicle width direction (in other words, parallel to the left wall portion 23, the right wall portion 26, and the intermediate wall portion 27). A distance between the rib R1v and the left wall portion 23 is equal to a distance between the rib R1v and the intermediate wall portion 27. The rib R1 h is formed into a plate-like shape perpendicular to the vehicle height direction (in other words, parallel to the upper wall portion 21 and the lower wall portion 22). A distance between the rib R1 h and the upper wall portion 21 is equal to a distance between the rib R1 h and the lower wall portion 22. When the rib R1v and the rib R1h are arranged in this way, four spaces (space S11, space S12, space S13, and space S14) are formed in the first shock absorbing portion SA1.

Further, in the second shock absorbing portion SA2, a rib R2v similar to the rib R1v is formed so as to extend in the vehicle front-and-rear direction. A distance between the rib R2v and the right wall portion 26 is equal to a distance between the rib R2v and the intermediate wall portion 27. When the rib R2v is arranged in this way, two spaces (space S21 and space S22) are formed in the second shock absorbing portion SA2.

Positions of rear ends of all the wall portions and all the ribs are flush with each other. Meanwhile, front ends of the upper wall portion 21 and the lower wall portion 22 project forward with respect to front ends of the other wall portions and the ribs. Shapes and positions of the front ends of the upper wall portion 21 and the lower wall portion 22, and front ends of the left wall portion 23, the inclined wall portion 24, the inclined wall portion 25, the right wall portion 26, the intermediate wall portion 27, the rib R1v, the rib R2v, and the rib R1h are set so that a front end plane of the shock absorbing portion 20 extends along respective portions of the bumper reinforcement BR under a state in which the shock absorbing member 10 is assembled to the bumper reinforcement BR.

Through-holes H1 and H2 are formed through upper surfaces and lower surfaces of front end portions of the upper wall portion 21 and the lower wall portion 22. Central axes of the through-holes H1 and the through-holes H2 are aligned with each other. Further, the wall portions and the ribs of the shock absorbing portion 20 are uniform in thickness.

The shock absorbing portion 20 is formed as follows. First, a preform is formed by executing an extrusion process on a metal material (such as aluminum material). This preform includes wall portions corresponding to the wall portions of the shock absorbing portion 20 and ribs corresponding to the ribs of the shock absorbing portion 20. Note that, an extruding direction of the metal material corresponds to the vehicle front-and-rear direction. Then, front end portions of the wall portions and the ribs of the preform are trimmed in conformity with shapes of the corresponding portions of the bumper reinforcement BR. Next, the through-holes H1 and the through-holes H2 are formed. In this way, the shock absorbing portion 20 is formed.

Further, the bracket portion 30 is made of the same material as that of the shock absorbing portion 20. The bracket portion 30 is formed into a plate-like shape perpendicular to the vehicle front-and-rear direction. The bracket portion 30 is welded to a rear end surface of the shock absorbing portion 20. In this way, the shock absorbing member 10 is formed. In front view of the shock absorbing member 10, an outer edge portion of the bracket portion 30 expands outward from an outer peripheral surface of the shock absorbing portion 20. A plurality of through-holes H3 and a plurality of through-holes H4 are formed through a front surface and a rear surface of the outer peripheral portion of the bracket portion 30. In front view of the shock absorbing member 10, two of the through-holes H3 are formed through a part positioned above the first shock absorbing portion SA1. Further, in front view of the shock absorbing member 10, the other two of the through-holes H3 are formed through a part positioned below the first shock absorbing portion SA1. Still further, in front view of the shock absorbing member 10, two of the through-holes H4 are formed through a part positioned above the second shock absorbing portion SA2. Yet further, in front view of the shock absorbing member 10, the other two of the through-holes H4 are formed through a part positioned below the second shock absorbing portion SA2. In addition, a plurality of through-holes H5 are formed through the front surface and the rear surface of the bracket portion 30. The through-holes H5 are formed respectively through the space S11, the space S12, the space S13, the space S14, the space S21, and the space S22.

The shock absorbing member 10 structured as described above is assembled to the bumper reinforcement BR as follows. Through-holes H6 are formed through the bumper reinforcement BR in the vehicle height direction (refer to FIG. 4). The through-holes H6 are formed at positions corresponding to the through-holes H1 and H2. Then, the rear end portion of the bumper reinforcement BR is inserted between the front end portion of the upper wall portion 21 and the front end portion of the lower wall portion 22, and the central axes of the through-holes H1 and H2 and central axes of the through-holes H6 are aligned with each other. Bolts VT are inserted into the through-holes H1 and H2 and the through-holes H6, and then nuts NT are fastened to distal ends of the bolts VT. In this way, the shock absorbing member 10 is assembled to the bumper reinforcement BR so that the rear end portion of the bumper reinforcement BR is sandwiched between the front end portion of the upper wall portion 21 and the front end portion of the lower wall portion 22.

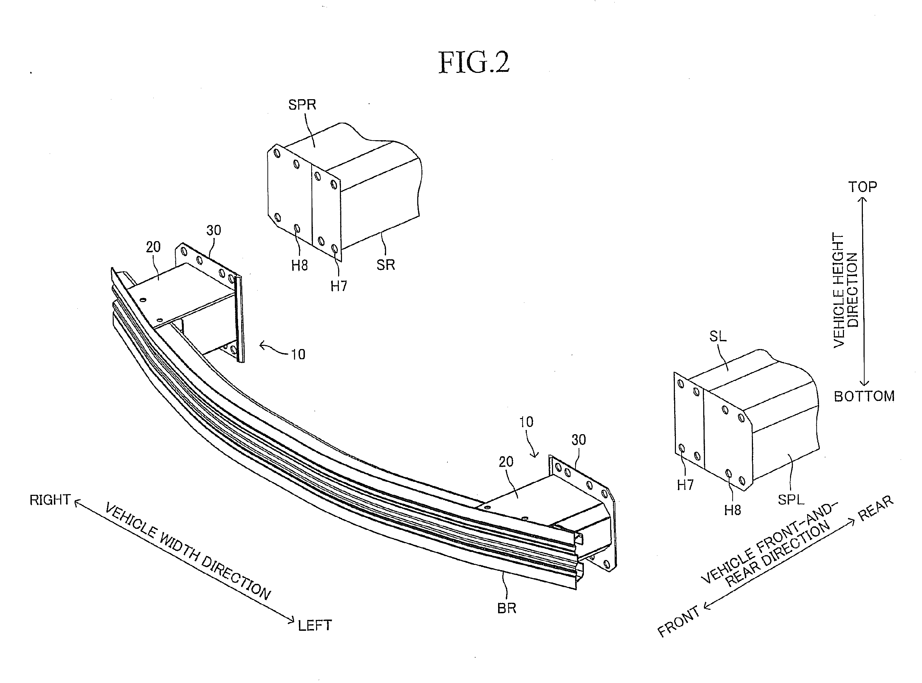

Further, the shock absorbing member 10 is assembled to the side member SR and the support member SPR as follows. As illustrated in FIG. 2, four through-holes H7 are formed through a front end surface and a rear end surface of a bracket portion of the side member SR. The through-holes H7 are formed at positions corresponding to the through-holes H3. Further, four through-holes H8 are formed through a front end surface and a rear end surface of a bracket portion of the support member SPR. The through-holes H8 are formed at positions corresponding to the through-holes H4. The rear end surface of the bracket portion 30 is brought into abutment against the front end surface of the side member SR and the front end surface of the support member SPR, and central axes of the through-holes H3 and the through-holes H7, and central axes of the through-holes H4 and through-holes H8 are aligned with each other. Bolts are inserted into the through-holes H3 and the through-holes H7, and the through-holes H4 and the through-holes H8, and then nuts are fastened to distal ends of those bolts. In this way, the shock absorbing member 10 is assembled to the side member SR and the support member SPR.

In this embodiment, the ribs are arranged in the first shock absorbing portion SA1 and the second shock absorbing portion SA2 so that the total area of the ribs and the wall portions forming a contour of the first shock absorbing portion SA1 in the cross-section of the first shock absorbing portion SA1, which is cut along the plane perpendicular to the vehicle front-and-rear direction, is larger than the total area of the ribs and the wall portions forming a contour of the second shock absorbing portion SA2 in the cross-section of the second shock absorbing portion SA2, which is cut along the above-mentioned plane. In other words, when an object OB collides against the front end portion of the vehicle 1 at a part ranging from a part at the front of the side member SR to the right end in the vehicle width direction (refer to FIG. 1), the area of a part subjected to a load generated by the collision is larger in a part corresponding to the first shock absorbing portion SA1 than in a part corresponding to the second shock absorbing portion SA2. Thus, a load to be applied to the first shock absorbing portion SA1 is higher than a load to be applied to the second shock absorbing portion SA2. In other words, a load to be applied to the support member SPR for supporting the second shock absorbing portion SA2 is lower than a load to be applied to the side member SR. Thus, even in a case where the strength of the support member SPR is smaller than the strength of the side member SR, the support member SPR can be suppressed from being damaged due to the shock.

Further, the total number of sides defined in a cross-section of the first shock absorbing portion SA1 cut along the plane perpendicular to the vehicle front-and-rear direction is larger than the total number of sides defined in a cross-section of the second shock absorbing portion SA2 cut along the above-mentioned plane. Note that, those total numbers of sides are each equal to the total number of the wall portions and the ribs formed in corresponding one of the above-mentioned cross-sections. Further, when the wall portions are continuous with other wall portions or ribs, connecting portions therebetween are each assumed as one end of the corresponding side. For example, the rib R1 h is continuous with the left wall portion 23. In this case, an upper part with respect to a connecting portion between the left wall portion 23 and the rib R1 h is counted as one side, and a lower part with respect to the connecting portion between the left wall portion 23 and the rib R1 h is counted as another side. In other words, the left wall portion 23 is formed of two wall portions (specifically, upper wall portion with respect to the connecting portion, and lower wall portion with respect to the connecting portion). Similarly, connecting portions between rib portions are each assumed as one end of the corresponding side. For example, the rib R1v and the rib R1h intersect with each other. In this case, an upper part of the rib R1v with respect to the rib R1h is counted as one side, and a lower part of the rib R1v with respect to the rib R1 is counted as another side. In other words, the rib R1v is formed of two ribs (specifically, upper rib with respect to the connecting portion, and lower rib with respect to the connecting portion).

In this way, the total number of sides defined in the cross-section of the first shock absorbing portion SA1 is set to be larger than the total number of sides defined in the cross-section of the second shock absorbing portion SA2. With this, the strength of the first shock absorbing portion SA1 is higher than the strength of the second shock absorbing portion SA2. Thus, the load to be applied to the second shock absorbing portion SA2 along with deformation of the second shock absorbing portion SA2 is lower than the load to be applied to the first shock absorbing portion SA1 along with deformation of the first shock absorbing portion SA1. Therefore, a load to be applied to the support member SPR in the event of a small overlap collision can be reduced as compared to that to be applied to the side member SR. With this, even in the case where the strength of the support member SPR is smaller than the strength of the side member SR, the support member SPR can be suppressed from being damaged due to the shock.

When the object OB intrudes into a vehicle cabin, the first shock absorbing portion SA1 and the second shock absorbing portion SA2, which are supported respectively by the side member SR and the support member SPR, are compressed in the vehicle front-and-rear direction. Specifically, the ribs and the wall portions forming the contours of the first shock absorbing portion SA1 and the second shock absorbing portion SA2 are deformed into a bellows shape. As described above, the load to be applied to the second shock absorbing portion SA2 is lower than the load to be applied to the first shock absorbing portion SA1. Thus, an amount of shock to be absorbed by the first shock absorbing portion SA1 is larger than an amount of shock to be absorbed by the second shock absorbing portion SA2. In addition, most of the sides defined in the cross-section of the first shock absorbing portion SA1 are shorter than the sides defined in the cross-section of the second shock absorbing portion SA2. Thus, a fluctuation range of the load at the time of deformation of the wall portions and the ribs of the first shock absorbing portion SA1 into the bellows shape is smaller than a fluctuation range of the load at the time of deformation of the wall portions and the ribs of the second shock absorbing portion SA2 into the bellows shape. Thus, the first shock absorbing portion SA1 is capable of absorbing shock more efficiently than the second shock absorbing portion SA2.

As described above, the shock absorbing member 10 is capable of suppressing damage to the side member SR and the support member SPR in the event of the small overlap collision, and capable of absorbing shock caused by the collision with the first shock absorbing portion SA1 and the second shock absorbing portion SA2. Further, the shock absorbing member 10 is integrally formed, and hence can be easily assembled to the bumper reinforcement BR, the side member SR, and the support member SPR. In other words, in comparison with the related art, the number of components and the number of assembly steps for the vehicle can be reduced.

An outer shape of an end portion of the first shock absorbing portion SA1 on the side member SR side conforms to an outer shape of the body part of the side member SR, and an outer shape of an end portion of the second shock absorbing portion SA2 on the support member SPR side conforms to an outer shape of the body part of the support member SPR. With this, the loads in the vehicle front-and-rear direction, which are applied to the first shock absorbing portion SA1 and the second shock absorbing portion SA2, are applied in the vehicle front-and-rear direction also to the side member SR and the support member SPR. Thus, the loads can be suppressed from being applied intensively to a part of the side member SR and the support member SPR. With this, the side member SR and the support member SPR can be suppressed from being damaged.

The present disclosure is not limited to the above-mentioned embodiment, but various modifications may be made without departing from the scope of the claims.

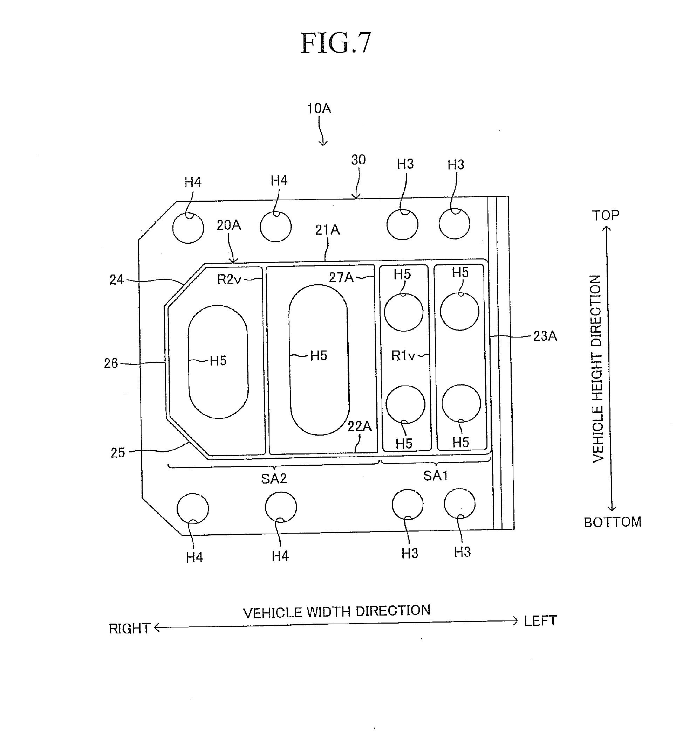

Further, in the above-mentioned embodiment, the wall portions and the ribs are uniform in thickness. However, the wall portions and the ribs of the first shock absorbing portion SA1 may be larger in thickness than the wall portions and the ribs of the second shock absorbing portion SA2. Alternatively, as in a shock absorbing portion 20A of a shock absorbing member 10A illustrated in FIG. 7, the wall portions and the ribs of the first shock absorbing portion SA1 may be larger in thickness than the wall portions and the ribs of the second shock absorbing portion SA2, and the rib R1 h may be omitted. Specifically, in an upper wall portion 21A and a lower wall portion 22A of this shock absorbing portion 20A, parts forming the first shock absorbing portion SA1 are larger in thickness than parts forming the second shock absorbing portion SA2. Further, a left wall portion 23A and an intermediate wall portion 27A are larger in thickness than the inclined wall portion 24, the inclined wall portion 25, the right wall portion 26, and other portions. In this shock absorbing portion 20A, the total number of sides defined in the cross-section of the first shock absorbing portion SA1 cut along the plane perpendicular to the vehicle front-and-rear direction is smaller than the total number of sides defined in the cross-section of the second shock absorbing portion SA2 cut along the above-mentioned plane. However, the total area of the wall portions and the ribs in the cross-section of the first shock absorbing portion SA1 is larger than the total area of the wall portions and the ribs in the cross-section of the second shock absorbing portion SA2.

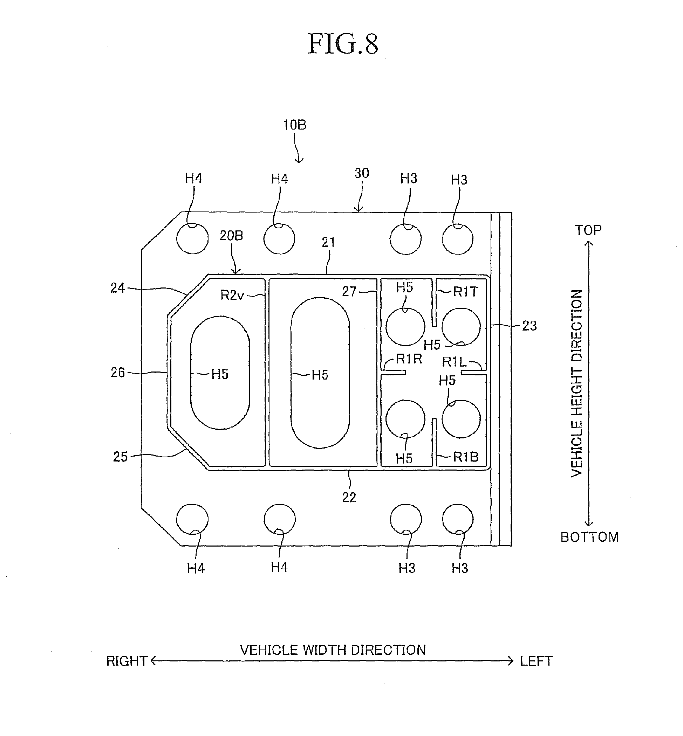

Still alternatively, for example, as in a shock absorbing portion 20B of a shock absorbing member 10B illustrated in FIG. 8, ribs R1T, R1 B, R1R, and R1L may be formed in the first shock absorbing portion SA1. As well as the rib R1v, the ribs R1T and R1B are formed at a central portion of the first shock absorbing portion SA1 in the vehicle width direction. The rib R1T is formed so as to extend downward from the lower surface of the upper wall portion 21. The rib R1 B is formed so as to extend upward from the upper surface of the lower wall portion 22. A lower end surface of the rib R1T and an upper end surface of the rib R1B are spaced apart from and opposed to each other in the vehicle height direction. The rib R1L is formed so as to extend rightward from a right side surface of the left wall portion 23. The rib R1 R is formed so as to extend leftward from a left side surface of the intermediate wall portion 27. A left end surface of the rib R1 R and a right end surface of the rib R1 L are spaced apart from and opposed to each other in the vehicle width direction. Note that, the wall portions and the ribs of the shock absorbing portion 20B are uniform in thickness. In this case, the total area of the wall portions and the ribs in the cross-section of the first shock absorbing portion SA1 is substantially equal to the total area of the wall portions and the ribs in the cross-section of the second shock absorbing portion SA2. However, the total number of the sides defined in the cross-section of the first shock absorbing portion SA1 cut along the plane perpendicular to the vehicle front-and-rear direction is larger than the total number of the sides defined in the cross-section of the second shock absorbing portion SA2 cut along the above-mentioned plane.

In other words, it is only necessary that the shock absorbing member be constructed so as to satisfy at least one of the following two conditions. Specifically, the first condition is that the total area of the wall portions and the ribs in the cross-section of the first shock absorbing portion SA1 is larger than the total area of the wall portions and the ribs in the cross-section of the second shock absorbing portion SA2. The second condition is that the total number of the sides defined in the above-mentioned cross-section of the first shock absorbing portion SA1 is larger than the total number of the sides defined in the above-mentioned cross-section of the second shock absorbing portion SA2. Also with this configuration, the same advantages as those of the above-mentioned embodiment are obtained.

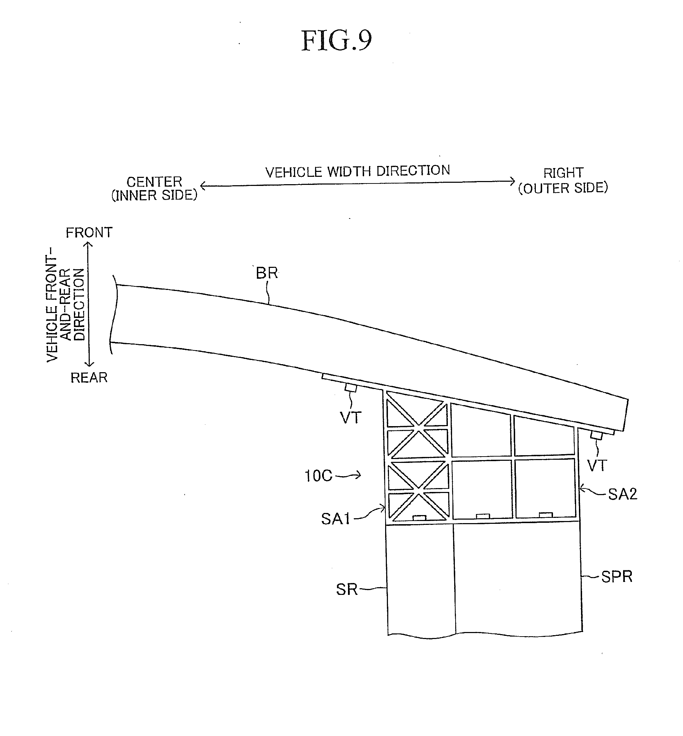

Further, in the above-mentioned embodiment, the shock absorbing portion 20 is formed by the extrusion process on a metal material, and the extruding direction of the metal material in this case corresponds to the vehicle front-and-rear direction. However, as in a shock absorbing member 10C illustrated in FIG. 9, the extruding direction of the metal material may correspond to the vehicle height direction (direction perpendicular to the drawing sheet of FIG. 9). In this case, the first shock absorbing portion SA1 and the second shock absorbing portion SA2 are each formed into a tubular shape having an axial line extending along the vehicle height direction. The first shock absorbing portion SA1 and the second shock absorbing portion SA2 each include the plurality of ribs. The plurality of ribs are arranged so that the total number of the sides defined in the cross-section of the first shock absorbing portion SA1 perpendicular to the vehicle height direction is larger than the total number of the sides defined in the cross-section of the second shock absorbing portion SA2 perpendicular to the vehicle height direction. Also with this, the load to be applied to the support member SPR in the event of a small overlap collision can be reduced as compared to that to be applied to the side member SR. Thus, even in the case where the strength of the support member SPR is smaller than the strength of the side member SR, the support member SPR can be suppressed from being damaged due to the shock. In other words, the shock caused by the collision can be absorbed with the first shock absorbing portion SA1 and the second shock absorbing portion SA2. Further, the shock absorbing member 10C is integrally formed, and hence can be easily assembled to the bumper reinforcement BR, the side member SR, and the support member SPR. In other words, in comparison with the related art, the number of components and the number of assembly steps for the vehicle can be reduced. Note that, in the example illustrated in FIG. 9, the total number of the sides defined in the above-mentioned cross-section of the first shock absorbing portion SA1 may be equal to or smaller than the total number of the sides defined in the above-mentioned cross-section of the second shock absorbing portion SA2, and the total area of the wall portions and the ribs in the cross-section of the first shock absorbing portion SA1 may be larger than the total area of the wall portions and the ribs in the cross-section of the second shock absorbing portion SA2.

## Claims

1. A shock absorbing member (10, 10A, 10B, 10C) to be interposed between a side member (5R) provided so as to extend in a vehicle front-and-rear direction and a bumper reinforcement (BR) provided at one of a front and a rear of the side member so as to extend in a vehicle width direction, the shock absorbing member comprising:
a first shock absorbing portion (SA1) for absorbing, through compression in the vehicle front-and-rear direction, shock to be applied from one of a rear side and a front side of a vehicle to the bumper reinforcement, the first shock absorbing portion being formed into a tubular shape extending in a predetermined direction, and being supported in abutment against one of a front end surface and a rear end surface of the side member, the first shock absorbing portion comprising at least one rib (R1v, R1h, R1T, R1B, R1R, R1L) extending in the predetermined direction at an inner side of the first shock absorbing portion; and
a second shock absorbing portion (SA2) for absorbing, through compression in the vehicle front-and-rear direction, the shock to be applied from the one of the rear side and the front side of the vehicle to the bumper reinforcement, the second shock absorbing portion being formed integrally with the first shock absorbing portion into a tubular shape extending in the predetermined direction at an outer side in the vehicle width direction with respect to the first shock absorbing portion, and being supported in abutment against one of a front end surface and a rear end surface of a support member (SPR) provided at an outer side in the vehicle width direction with respect to the side member, the second shock absorbing portion comprising at least one rib (R2v) extending in the predetermined direction at an inner side of the second shock absorbing portion,
wherein a total area of a wall portion (21, 22, 23, 27) forming a contour of the first shock absorbing portion and the rib (R2v) of the first shock absorbing portion in a cross-section of the first shock absorbing portion, which is cut along a plane perpendicular to the predetermined direction, is larger than a total area of a wall portion (21, 22, 24, 25, 26, 27) forming a contour of the second shock absorbing portion and the rib of the second shock absorbing portion in a cross-section of the second shock absorbing portion, which is cut along the plane perpendicular to the predetermined direction.

2. A shock absorbing member according to claim 1, wherein a total number of sides defined in the cross-section of the first shock absorbing portion (SA1), which is cut along the plane perpendicular to the predetermined direction, is larger than a total number of sides defined in the cross-section of the second shock absorbing portion (SA2), which is cut along the plane perpendicular to the predetermined direction.

3. A shock absorbing member according to claim 1 or 2, wherein the first shock absorbing portion (SA1) and the second shock absorbing portion (SA2) are formed integrally with each other by an extrusion process so that the predetermined direction corresponds to the vehicle front-and-rear direction.

4. A shock absorbing member according to any one of claims 1 to 3,
wherein an outer shape of the first shock absorbing portion (SA1) in a cross-section perpendicular to the vehicle front-and-rear direction conforms to an outer shape of a body part of the side member (SR) in a cross-section perpendicular to the vehicle front-and-rear direction, and
wherein an outer shape of the second shock absorbing portion (SA2) in a cross-section perpendicular to the vehicle front-and-rear direction conforms to an outer shape of a body part of the support member (SRR) in a cross-section perpendicular to the vehicle front-and-rear direction.

5. A shock absorbing member according to any one of claims 1 to 4, wherein the wall portion of the first shock absorbing portion (SA1) and the rib of the first shock absorbing portion are larger in thickness than the wall portion of the second shock absorbing portion (SA2) and the rib of the second shock absorbing portion.

6. A shock absorbing member according to any one of claims 1 to 5,
wherein the rib of the first shock absorbing portion (SA1) comprises:
a first rib (R1T) extending downward from an upper wall portion of the first shock absorbing portion; and
a second rib (R1 B) extending upward from a lower wall portion of the first shock absorbing portion, and
wherein a lower end surface of the first rib and an upper end surface of the second rib are spaced apart from each other in a vehicle height direction.

7. A shock absorbing member according to any one of claims 1 to 6,
wherein the rib of the first shock absorbing portion (SA1) comprises:
a first rib (R1 L) extending rightward from a left wall portion of the first shock absorbing portion; and
a second rib (R1 R) extending leftward from a right wall portion of the first shock absorbing portion, and
wherein a right end surface of the first rib and a left end surface of the second rib are spaced apart from each other in the vehicle width direction.
